# EUROPEAN PATENT SPECIFICATION

(11) **EP 3 234 486 B1**
(45) Date of publication and mention of the grant of the patent: **16.09.2020**
(21) Application number: 14824454.4
(22) Date of filing: 18.12.2014
(51) Int. Cl.: B60P 3/20, F25D 11/00, F25D 13/02, F25D 19/00, F25D 23/02, F25D 23/06, F25D 25/00

(54) **METHOD FOR RETROFITTING A REFRIGERATED CONTAINER WITH LOCKABLE REFRIGERATED COMPARTMENTS AND REFRIGERATED CONTAINER COMPRISING RETROFITTED LOCKABLE REFRIGERATED COMPARTMENTS**
VERFAHREN ZUM NACHRÜSTEN EINES GEKÜHLTEN CONTAINERS MIT VERRIEGELBAREN GEKÜHLTEN FÄCHERN UND GEKÜHLTER CONTAINER MIT NACHGERÜSTETEN VERRIEGELBAREN GEKÜHLTEN FÄCHERN
PROCÉDÉ POUR RATTRAPER UN CONTENEUR RÉFRIGÉRÉ AVEC COMPARTIMENTS RÉFRIGÉRÉS VERROUILLABLES ET UN CONTENEUR RÉFRIGÉRÉ COMPRENANT COMPARTIMENTS RATTRAPÉS RÉFRIGÉRÉS ET VERROUILLABLES

(43) Date of publication of application: 25.10.2017
(73) Proprietor: Carrier Corporation, Farmington, CT 06034-4015 (US)
(72) Inventor: HEMSCHEMEIER, Stefan, 55246 Mainz-Kostheim (DE)
(74) Representative: Schmitt-Nilson Schraud Waibel Wohlfrom Patentanwälte Partnerschaft mbB
(86) International application number: PCT/EP2014/078427
(87) International publication number: WO 2016/096012

(56) References cited:
- WO-A1-01/66382
- WO-A1-2005/016688
- WO-A1-2014/094048
- FR-A1- 2 941 441
- US-A- 4 505 126
- US-A1- 2012 209 763

## Description

The present invention relates to a method for retrofitting a refrigerated container with lockable refrigerated compartments and to a refrigerated container comprising retrofitted lockable refrigerated compartments.

In the state of the art, refrigerated containers for storing goods to be cooled, for example perishable goods like food, beverages or dairy are available.

WO 2014/094048 discloses a locker assembly comprising a refrigerated cabinet having at least one closable door and there being a locker assembly positioned inside the refrigerated cabinet. The locker assembly comprises a locker door assembly and locker dividers located behind the door assembly the door assembly comprising a plurality of locker doors disposed inside of the refrigerated cabinet door, the refrigerated cabinet have a cooled space divided vertically by horizontally spaced dividers, an airflow passage means for flow of air through the cooled space, the airflow passage means comprising an intake communicating with a manifold and plural vertically spaced outlets communicating between the manifold and the cooled space.

From the US 2012/0209763 A1 an individual locker assembly for refrigerators is known, which is intended for use in the workplace for employees to secure their perishable foods and beverages. The locker assembly is also suitable for installation in refrigerators in medical offices and the like for the secure storage of controlled medications and the like that must be refrigerated. The locker assembly has a series of panels and dividers installable in an existing refrigerator unit, with the panels and dividers defining a series of individual lock boxes, each having its own lockable door. Alternatively, a specially configured refrigerator has an open front and a series of individual lock boxes installed therein. Each lock box is in contact with other boxes and/or the walls, floor, and top panels of the refrigerator, and is thermally sealed thereto. Each lock box has its own lockable door. The refrigerator includes a system for automating the lock box rental transactions.

US 4 505 126 A discloses a transport system for food products that contemplates a land vehicle with a van body and a refrigeration unit and a food product carrier which may be inserted and withdrawn from the interior of the van body. The carrier has a plurality of compartments for housing the refrigerated food products and when the carrier is in its operative position in the van body, it is arranged to cooperated with the refrigeration unit so that the unit serves to refrigerate the food products in one of the end compartments of the carrier. Between the compartments, the carrier is provided with movable panels that are equipped with motorized fans for circulating air between adjacent compartments. This circulates air between the compartments and the arrangement is such the temperature range maintained in each compartment rises from one compartment to the next. Each compartment is accessible from the exterior of the van body and through aligned doorways in the adjacent side walls of the van body and carrier. These doorways in the carrier are panel type, track mounted doors whereas those in the van body may be hinged for pivotal movement about a vertical axis. Non-refrigerated food products are stored in a compartment located in the van body and between the rear wall of the van body and the carrier as it is located in its operative position therein.

A method of and a vehicle for transporting and distributing cooled or frozen goods to customers is known from WO 01/66382 A1. The vehicle comprises a thermally insulated compartment (for receiving the cooled or frozen goods to be distributed, and a cab. The goods are loaded into the compartment through the doors. A plurality of interchangeable coldness accumulators or refrigerating units are mounted within the insulated compartment, and the vehicle comprises conduit means for passing cooling medium into or for circulating cooling medium within the insulated compartment. Connecting means are provided for connecting said conduit means to a separate, central refrigerating system, so as to cool the insulated compartment and its contents to a predetermined low temperature well below the freezing point.

WO 2005/016688 A1 discloses a container for use in a refrigerator/freezer car, in which cold air or conditioned air is forcibly blown forward and rearward from the central top of the container toward. The container comprises: a body having at least one compartment formed in the body, wherein pallets stacked with products packing boxes are loaded into the compartment, and doors provided at the opposite side thereof for opening and closing the compartment; a structure installed at the center of the compartment to bisect the compartment to form storage chambers for receiving the pallets; and at least one air-conditioner consisting of an outdoor unit installed at the outside of the body for compressing coolant, and an indoor unit installed on the top of the structure and connected to the outdoor unit via a coolant conduit for supplying and forcibly circulating conditioned air or cold air all over the storage chambers.

The invention is defined by the subject-matter of claim 1. Further embodiments are disclosed in the dependent claims.

By using air permeable compartments, a reliable separation of the compartments from each other as well as a sufficient air circulation inside the refrigerated container and sufficient cooling/freezing of the goods stored in the lockable compartments and in the rest of the refrigerated container can be reliably ensured.

The refrigerated container can be operated with a so-called plug in refrigerating unit so that the refrigerated container comprises a compressor, a condenser, an expansion valve and an evaporator. Alternatively, the refrigerated container can be operated with a remote condensing unit, which can for example be arranged on the roof of a building. The refrigerated container can be remote-monitored.

According to an embodiment, which comprises all the technical features of the independent claim 1, the air permeable compartments comprise a bottom portion, a top portion, a left side wall portion, a right side wall portion and a rear wall portion, at least one of those portions being permeable to air, and/or wherein at least one of the portions comprises a perforated plate or a wire grid, and/or wherein the perforated plate or wire grid comprises a plastics or metal material. Such compartments are reliably separated from adjacent compartments and provide only access to the goods stored therein, while preventing access to goods stored in another compartments. At the same time a sufficient air circulation and sufficient cooling or freezing of the goods stored in these compartments is ensured.

According to the invention, which is defined by all the technical features of the independent claim 1, the whole side wall of the refrigerated container is removed to form an opening in the refrigerated container the dimensions of which correspond to the dimensions of the walls, bottom and ceiling surrounding the opening and a door frame is mounted to the opening in the refrigerated container by connecting the same to the bottom portion, to the front edge of the roof portion, and to the front edges of the adjacent side walls of the refrigerated container. By replacing a whole side wall of a refrigerated container by a door frame, by a desired number of air permeable compartments and associated doors, refrigerated containers can be retrofitted with a desired number of lockable compartments at low costs and with comparably low effort.

By removing part of a side wall of the refrigerated container, by mounting a door frame to such opening, the door frame defining access portion for a number of refrigerated compartments, by attaching air permeable compartments to such door frame, and by mounting doors to each door frame access portion, existing refrigerated containers can be retrofitted with a desired number of lockable compartments at low costs and with comparably low effort.

According to the invention, which is defined by all the technical features of the independent claim 1, the door frame defines multiple rows and multiple columns of door frame access portions to individual compartments. In such embodiment, a sufficiently great number of door frame access portions can be provided as desired.

According to a further embodiment, the front faces of the doors align with the front edge of the ceiling and with the front edges of the adjacent side walls of the refrigerated container. By such embodiment, a convenient access to the doors can be provided and the existing space within the refrigerated container can be utilized.

According to a further embodiment, the doors are formed as pivotable doors, and/or the doors that are arranged in or at one column of the door frame are pivotable around hinges that form together a substantially vertical axis. Such doors provide a convenient access to the compartments and are easy and inexpensive to retrofit.

According to a further embodiment, the doors comprise an insulating material such as an insulating foam. By making the doors of an insulating material, a high energy efficiency can be ensured.

According to a further embodiment, the refrigerated container further comprises a framework of horizontal beams and vertical beams provided at the outer edges of the refrigerated container for securely connecting the walls, the bottom and the ceiling together, particularly the vertical beams of the framework being respectively provided between adjacent walls, and horizontal beams are provided to respectively connect the bottom to the lower edges of the walls and to connect the ceiling to the upper edges of the walls, and/or wherein fastening elements are provided respectively connecting two adjacent horizontal beams and one respective adjacent vertical beam at the corners of the refrigerated container, and/or wherein the step of mounting a door frame to the opening in the refrigerated container comprises temporarily removing at least one of the vertical and horizontal beams, inserting the door frame, reinserting the at least one vertical and horizontal beam, and attaching the door frame. Such modular arrangement facilitates the insertion and the mounting of the door frame.

According to a further embodiment, the step of mounting a door frame to the opening in the refrigerated container comprises providing an airtight sealing between the door frame and the edges surrounding the opening in the refrigerated container. Such air tight sealing contributes to a high energy efficiency.

According to a further embodiment, the step of mounting a door to each door frame access portion comprises attaching sealing elements, particularly sealing strips, between the door frame access portions and the respective doors positioned before such door frame access portions. Such sealing elements contribute to a high energy efficiency.

According to a further embodiment, the locks are formed as mechanical locks configured to be locked and unlocked by means of a key, or as electronic locks configured to be locked and unlocked by means of an electronic key, such as a chip card, or as electronic locks comprising an input field or an input keyboard by means of which an access code like a PIN can be put in.

According to a further embodiment, the locks comprise an interlocking mechanism, such as a locking bar configured to engage an opening within the respective door frame access portion.

By such mechanical or electronic locks a reliable locking of the respective refrigerated compartments can be ensured and an unauthorized access can be avoided.

According to a further embodiment, the refrigerated container further comprises an heat absorption heat exchanger and an associated fan located in the interior of the refrigerated container.

According to a further embodiment, the refrigerated container further comprises a compressor, a heat rejection heat exchanger, especially a condenser, and an expansion device connected upstream of the heat absorption heat exchanger, and refrigerant conduits respectively interconnecting the compressor, the heat rejection heat exchanger, the expansion device and the heat absorption heat exchanger and circulating a refrigerant therethrough. Since the remainder of the refrigerated container, except for the door or part of the door which is removed, and the existing refrigeration devices, particularly the heat absorption heat exchanger and the associated fan located in the interior of the refrigerated container as well as the other refrigeration elements like a compressor, a heat rejection heat exchanger, especially a condenser, and an expansion device connected upstream of the heat absorption heat exchanger as well as the respective refrigerant conduits interconnecting these elements and circulating a refrigerant therethrough, can remain as they are and do not need to be changed, lockable refrigerated compartments can be added to an existing refrigerated container without having to provide additional refrigeration devices and without having to change the existing refrigerant devices to a significant extent.

Embodiments of the invention are described in greater detail below with reference to the figures, wherein:
- Fig. 1: shows a schematic view of a coldroom according to the known prior art documents to be retrofitted with lockable compartments;
- Fig. 2: shows a schematic view of the coldroom of Fig. 1, wherein the left side wall has been removed, wherein a door frame defining door frame access portions has been mounted into the resulting opening and connected to the front wall, the rear wall, the bottom, and the ceiling of the coldroom, and wherein wire grid compartments have been attached to the door frame access portions;
- Fig. 3: shows a schematic view of the coldroom of Fig. 2 wherein three exemplary doors have been mounted to vertical beam portions of the door frame, the doors being in an opened position, respectively; and
- Fig. 4: shows the coldroom of Figs. 2 and 3, wherein an array of 3x4 doors have been mounted to the door frame, the doors being in their closed position.

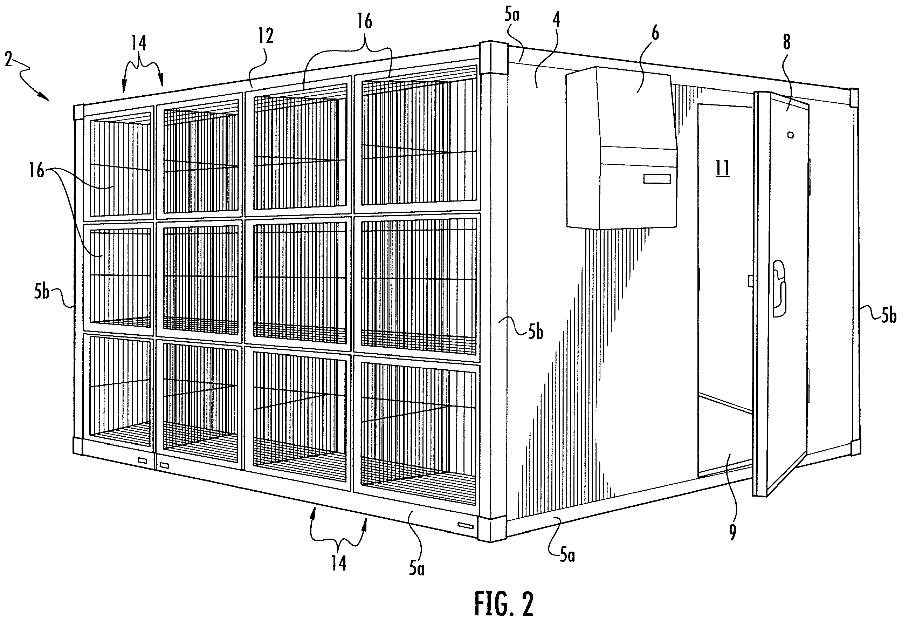

In the embodiments of Figs. 2 to 4, a stationary coldroom 2 is depicted as an example for a refrigerated container and as an example of retrofitting a refrigerated container with lockable compartments. Alternatively, also a mobile refrigerated container, such as a refrigerated van, truck or trailer could have been depicted and retrofitted with lockable compartments.

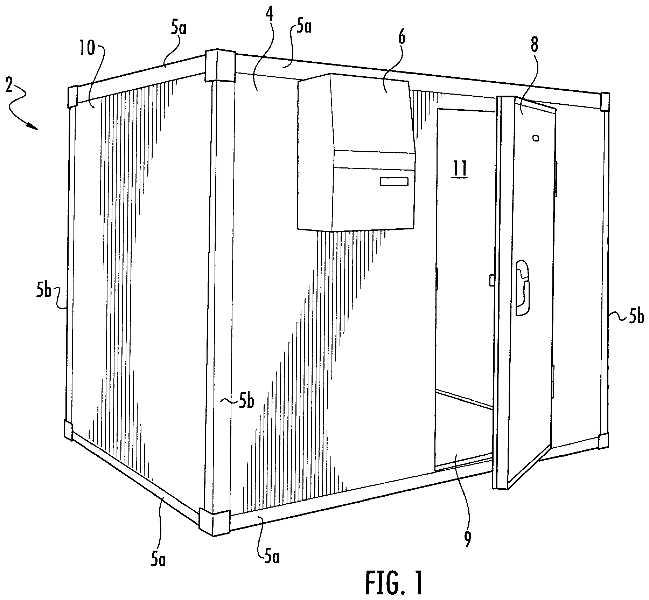

Fig. 1 shows a schematic view of a coldroom 2 according to the known prior art documents to be retrofitted with lockable compartments.

The coldroom 2 comprises a front wall 4, an opposite rear wall (not visible), a side wall 10 adjacent to the left edge of the front wall 4, an opposite side wall 11, part of which is visible through an entrance door 8 opening in the the front wall 4, a bottom 9 part of which is visible through the entrance door 8 opening, and a ceiling (not visible).

At the front wall 4 there is provided a control unit 6 for controlling the operation of the refrigeration devices of the coldroom 2 which are not visible in Fig. 1 and can comprise a vapor compression cycle including a compressor, a heat rejection heat exchanger having a fan associated therewith, an expansion device, a heat absorption heat exchanger, particularly an evaporator having a fan associated therewith, and refrigerant conduits connecting these elements and circulating a refrigerant therethrough. These elements are not shown in the Figures, but typically the heat absorption heat exchanger and the fan associated therewith are positioned within the interior of the coldroom 2, whereas the other elements of the vapor compression cycle are located exterior to the coldroom 2.

The coldroom 2 further comprises a framework of horizontal beams 5a and vertical beams 5b provided at the outer edges of the coldroom 2 for securely connecting the walls, the bottom and the ceiling together. In particular, the vertical beams 5b of the framework are respectively provided between adjacent walls, and horizontal beams 5a are provided to respectively connect the bottom to the lower edges of the walls and to connect the ceiling to the upper edges of the walls. Fastening elements respectively connecting two adjacent horizontal beams and one respective adjacent vertical beam are provided at the eight corners of the coldroom 2, six of which are visible in Fig. 1.

The walls, the bottom and the ceiling comprise an insulating material such as an insulating foam or the like.

Fig. 2 shows a schematic view of the coldroom 2, wherein the left side wall 10 has been removed, wherein a door frame 12 defining altogether twelve door frame access portions 14 has been mounted into the resulting opening and connected to the front wall 4, the rear wall, the bottom 9, and the ceiling of the coldroom 2, and wherein one respective wire grid compartment 16 has been attached to each of the door frame access portions 14, so that each of the twelve door frame access portions 14 is equipped with a respective wire grid compartment 16.

Fig. 2 shows the coldroom 2 of Fig. 1 after the first three steps for retrofitting the coldroom 2 with lockable compartments have been carried out.

In a first step, the side wall 10 has been removed from the coldroom 2 to form an opening in the coldroom 2. Particularly, the side wall 10 has been removed by disconnecting the outer edges of the side wall 10 from the surrounding horizontal framework beams 5a and the vertical framework beams 5b. In order to facilitate the removal of the side wall 10, one or more of the surrounding horizontal and vertical framework beams 5a and 5b can be removed temporarily and connected to the respective adjacent front wall 4, rear wall, bottom 9 and ceiling again after the door frame 12 has been inserted. The opening which is formed in the coldroom 2 after removing the side wall 10 is confined by the surrounding horizontal and vertical framework beams 5a and 5b.

In a second step, a door frame 12 whose outer dimensions substantially correspond to the inner dimensions of the opening, has been mounted to the opening by attaching the left and right outer edges of the door frame 12 to the inner faces of the vertical framework beams 5b and by attaching the upper and lower edges of the door frame 12 to the lower face of the upper horizontal framework beam 5a and by attaching the lower edge of the door frame 12 to the upper face of the lower horizontal framework beam 5a. The door frame 12 is mounted into the opening such that an airtight connection between the door frame 12 and the horizontal and vertical framework beams 5a and 5b is accomplished. For this purpose, sealing means like a sealing strip, a sealing foam, a silicone sealing material or the like can be provided between the outer edges of the door frame 12 and the respective horizontal and vertical framework beams 5a and 5b. The door frame 12 defines access portions for a number of refrigerated compartments to be provided. In the present embodiment, the door frame 12 comprises four vertical beams that are arranged equidistantly and three horizontal beams that are also arranged equidistantly, so as to define altogether twelve door frame access portions 14 of respective rectangular shape therein.

In a third step, air permeable wire grid compartments 16 are attached to each door frame access portion 14. In the present embodiments twelve wire grid compartments 16 are attached to the respective door frame access portions 14 by mounting their front ends appropriately to the beam portions of the door frame 12 surrounding the respective door frame access portion 14. The wire grid compartments 16 comprise a bottom portion, a top portion, left and right side wall portions and a rear wall portion made out of a wire grid structure in order to allow cooled air to flow through the interior of the respective wire grid compartment 16 for cooling the respective goods stored therein.

The compartments 16 extend from the door frame access portion 14 substantially into the direction of the opposite side wall 11 and occupy part of the width of the interior of the coldroom 2. The door frame 12 of the present embodiment defines four rows and three columns of door frame access portions 14 and altogether twelve door frame access portions 14 for individual compartments.

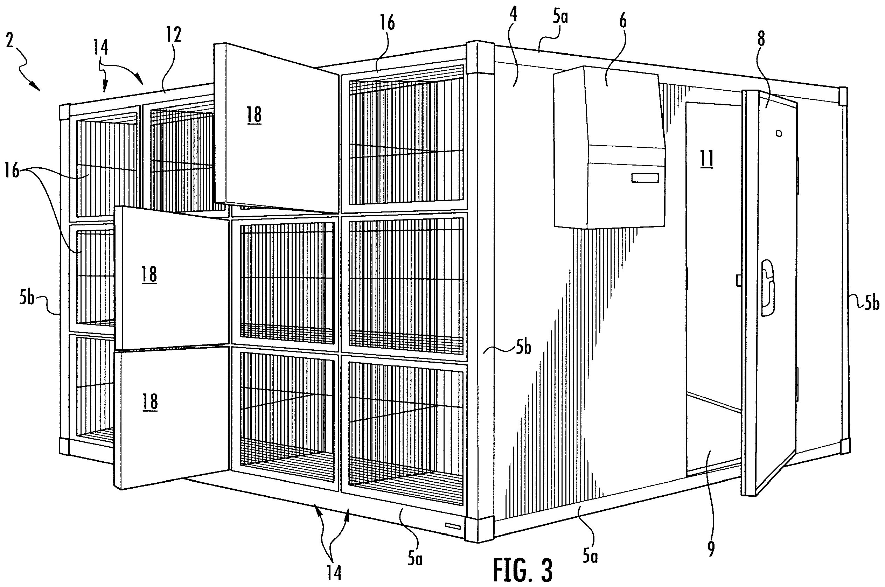

Fig. 3 shows a schematic view of the coldroom 2 wherein three exemplary doors 18 have been mounted to vertical beam portions of the door frame 12, the doors 18 being in an opened position, respectively.

Fig. 3 shows the coldroom 2 during a next step during the procedure for retrofitting the coldroom 2 with lockable compartments, namely during the step of mounting doors 18 to the respective door frame access portions 14.

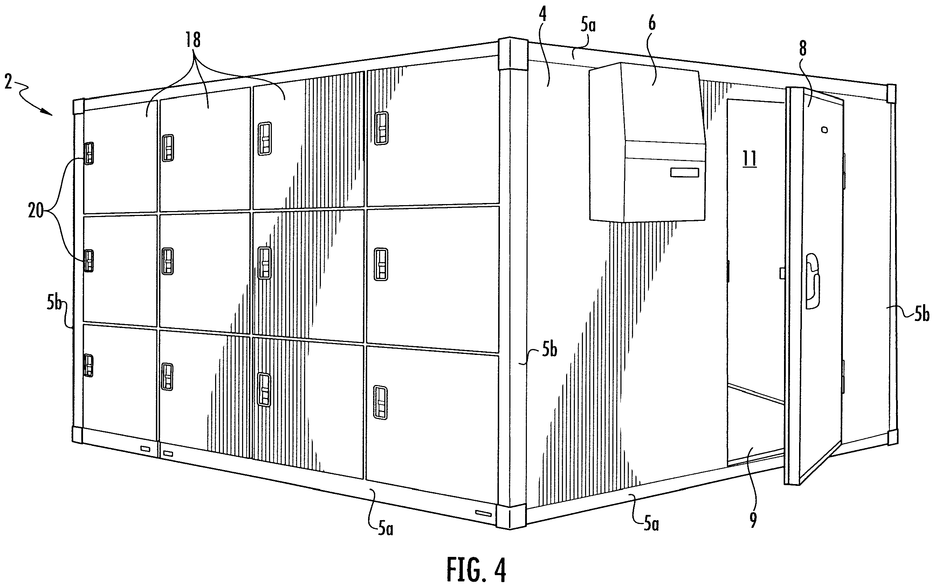

All of the twelve door frame access portions 14 are provided with respective doors 18, while in Fig. 3 three exemplary doors are shown while being mounted to a hinge provided at the respective vertical beam portion of the door frame 12. The doors 18 are sized to fully cover in their closed positions the respective door frame access portions 14 and at least part of the horizontal and vertical beam portions of the door frame 12 surrounding the same. The doors 18 are shown as hinged, movable doors that can be moved between an open position providing access to the respective refrigerated compartment 16 behind such door 18 which is shown in Fig. 3 by the three exemplary doors, and a closed position in which the respective door 18 closes the respective door frame access portion 14 and prevents access to the wire grid compartment 16 arranged behind the same, as it is shown in Fig. 4.

Not visible in Fig. 3 are the locks with which each door 18 is provided, and the openings in the door frame access portions 14 in which a locking bar of the lock provided at the moved end of the respective door 18 engages for locking the doors in their closed position.

Fig. 4 shows the coldroom 2, wherein an array of 3x4 doors 18 have been mounted to the door frame 12, the doors 18 being in their closed position.

Fig. 4 shows the coldroom 2 after the step of mounting all the doors 18 to the respective door frame access portions 14 of the door frame 12, with all the doors 18 being in their closed position. In Fig. 4 the locks 20 together with respective handles which can be configured as shell-type handles are provided at the left-hand sides of the respective doors 18 in a vertical position corresponding approximately to the middle of the height of the respective doors 18. Therefore, the locks 20 of the doors 18 which can be configured as mechanical or electronic locks engage with their locking bar into corresponding openings at the left horizontal beam portions of the door frame access portions 14 corresponding to the respective doors 18. The doors 18 can be moved around vertical hinges provided at their right hand edges.

The doors 18 comprise an insulating material such as an insulating foam. The step of mounting the doors 18 to each door frame access portion 15 can comprise the step of attaching sealing elements, particularly sealing strips between the door frame access portions 14 and the respective doors 18.

The coldroom 2 depicted in Fig. 4 has been retrofitted with twelve lockable compartments that provide individual access to refrigerated goods to be stored in such refrigerated compartments.

While the invention has been described with reference to an exemplary embodiment, it will be understood by those skilled in the art that various changes may be made and equivalents may be substituted for elements thereof without departing from the scope of the invention, which is disclosed in the independent claim 1.

Therefore, it is intended that the invention is not limited to the particular embodiment disclosed, but that the invention will include all embodiments falling within the scope of the appended claims.

### List of Reference Numerals

- 2: coldroom
- 4: front wall
- 5a: horizontal framework beam(s)
- 5b: vertical framework beam(s)
- 6: control unit
- 8: entrance door
- 9: bottom
- 10: side wall
- 11: opposite side wall
- 12: doorframe
- 14: door frame access portion(s)
- 16: wire grid compartment(s)
- 18: door(s)
- 20: lock(s)

## Claims

1. Method for retrofitting a refrigerated container (2), particularly a stationary coldroom or a mobile refrigerated container, such as a refrigerated van, truck or trailer, with lockable refrigerated compartments (16) for providing individual access to refrigerated goods to be stored in such refrigerated compartments (16), said method including the steps of:
providing a refrigerated container (2) comprising a door (8) opening in a front wall (4) thereof;
removing at least part of a side wall (10) of the refrigerated container (2) to form an additional opening in the refrigerated container (2);
mounting a door frame (12) to the opening in the refrigerated container (2) such that the door frame (12) provides an airtight connection to the opening in the refrigerated container (2), the door frame (12) defining access portions (14) for a number of refrigerated compartments (16);
attaching, to at least one door frame access portion (14), an air-permeable compartment (16), said compartment (16) extending from the door frame access portion (14) substantially into the direction of the opposite side wall (11) of the refrigerated container (2); and
mounting to each door frame access portion (14) a door (18) such that such door (18) is moveable between an open position providing access to the refrigerated compartment (16) behind the door (18) and a closed position in which the door (18) closes the respective door frame access portion (14), the door (18) comprising a lock (20) for locking the door (18) in the closed position;
wherein a whole side wall of the refrigerated container (2) is removed to form an opening in the refrigerated container (2) the dimensions of which correspond to the dimensions of the walls, bottom and ceiling surrounding the opening, and a door frame (12) is mounted to the opening in the refrigerated container (2) by connecting the same to the bottom portion, to the front edge of the roof portion, and to the front edges of the adjacent side walls of the refrigerated container (2); and
wherein the door frame (12) defines multiple rows and multiple columns of door frame access portions (14) to individual compartments (16).

2. Method of claim 1, wherein the air permeable compartments (16) comprise a bottom portion, a top portion, a left side wall portion, a right side wall portion and a rear wall portion, at least one of those portions being permeable to air, and/or wherein at least one of the portions comprises a perforated plate or a wire grid, and/or wherein the perforated plate or wire grid comprises a plastics or metal material.

3. Method of any of the preceding claims, wherein the front faces of the doors (18) align with the front edge of the ceiling and with the front edges of the adjacent side walls of the refrigerated container (2).

4. Method of any of the preceding claims, wherein the doors (18) are formed as pivotable doors (18), and/or wherein the doors (18) that are arranged in or at one column of the door frame (12) are pivotable around hinges that form together a substantially vertical axis.

5. Method of any of the preceding claims, wherein the doors (18) comprise an insulating material such as an insulating foam.

6. Method of any of the preceding claims, wherein the refrigerated container (2) further comprises a framework of horizontal beams and vertical beams provided at the outer edges of the refrigerated container (2) for securely connecting the walls, the bottom and the ceiling together, particularly the vertical beams of the framework are respectively provided between adjacent walls, and horizontal beams are provided to respectively connect the bottom to the lower edges of the walls and to connect the ceiling to the upper edges of the walls, and/or wherein fastening elements are provided respectively connecting two adjacent horizontal beams and one respective adjacent vertical beam at the corners of the refrigerated container (2), and/or wherein the step of mounting a door frame (12) to the opening in the refrigerated container (2) comprises temporarily removing at least one of the vertical and horizontal beams, inserting the door frame (12), reinserting the at least one vertical and horizontal beam, and attaching the door frame (12).

7. Method of any of the preceding claims, wherein the step of mounting a door frame (12) to the opening in the refrigerated container (2) comprises providing an airtight sealing between the door frame (12) and the edges surrounding the opening in the refrigerated container (2).

8. Method of any of the preceding claims, wherein the step of mounting a door (18) to each door frame access portion (14) comprises attaching sealing elements, particularly sealing strips, between the door frame access portions (14) and the respective doors (18) positioned before such door frame access portions (14).

9. Method of any of the preceding claims, wherein the locks (20) are formed as mechanical locks configured to be locked and unlocked by means of a key, or as electronic locks configured to be locked and unlocked by means of an electronic key, such as a chip card, or as electronic locks comprising an input field or an input keyboard by means of which an access code like a PIN can be put in.

10. Method of any of the preceding claims, wherein the locks (20) comprise an interlocking mechanism, such as a locking bar configured to engage an opening within the respective door frame access portion (14).

11. Method of any of the preceding claims, wherein the refrigerated container (2) further comprises a heat absorption heat exchanger and an associated fan located in the interior of the refrigerated container (2).

12. Method of claim 11, wherein the refrigerated container (2) further comprises a compressor, a heat rejection heat exchanger, especially a condenser, and an expansion device connected upstream of the heat absorption heat exchanger, and refrigerant conduits respectively interconnecting the compressor, the heat rejection heat exchanger, the expansion device and the heat absorption heat exchanger and circulating a refrigerant therethrough.

## Patentansprüche

1. Verfahren zum Nachrüsten eines gekühlten Containers (2), insbesondere eines stationären Kühlraums oder eines mobilen gekühlten Containers, wie etwa eines gekühlten Vans, Lastwagens oder Anhängers, mit verriegelbaren gekühlten Fächern (16) zum Bereitstellen von individuellem Zugriff auf gekühlte Waren, die in derartigen gekühlten Fächern (16) gelagert werden sollen, wobei das Verfahren die folgenden Schritte beinhaltet:
Bereitstellen eines gekühlten Containers (2), der eine Tür-(8) Öffnung in einer Vorderwand (4) davon umfasst;
Entfernen mindestens eines Teils einer Seitenwand (10) des gekühlten Containers (2), um eine zusätzliche Öffnung in dem gekühlten Container (2) zu bilden;
Montieren eines Türrahmens (12) an der Öffnung in dem gekühlten Container (2), sodass der Türrahmen (12) eine luftdichte Verbindung mit der Öffnung in dem gekühlten Container (2) bereitstellt, wobei der Türrahmen (12) Zugriffsbereiche (14) für eine Anzahl von gekühlten Fächern (16) definiert;
Anbringen eines luftdurchlässigen Fachs (16) an mindestens einen Türrahmenzugriffbereich (14), wobei sich das Fach (16) von dem Türrahmenzugriffbereich (14) im Wesentlichen in die Richtung der gegenüberliegenden Seitenwand (11) des gekühlten Containers (2) erstreckt; und
Montieren einer Tür (18) an jeden Türrahmenzugriffsbereich (14), sodass diese Tür (18) zwischen einer offenen Position, die Zugriff auf das gekühlte Fach (16) hinter der Tür (18) bereitstellt, und einer geschlossenen Position, in der die Tür (18) den jeweiligen Türrahmenzugriffsbereich (14) verschließt, beweglich ist, wobei die Tür (18) eine Verriegelung (20) zum Verriegeln der Tür (18) in der geschlossenen Position umfasst;
wobei eine ganze Seitenwand des gekühlten Containers (2) entfernt wird, um eine Öffnung in dem gekühlten Container (2) zu bilden, deren Abmessungen den Abmessungen der Wände, des Bodens und der Decke entsprechen, die die Öffnung umgeben, und ein Türrahmen (12) an der Öffnung in dem gekühlten Container (2) montiert wird, indem derselbe mit dem Bodenbereich, mit der Vorderkante des Dachabschnitts und mit den Vorderkanten der benachbarten Seitenwände des gekühlten Containers (2) verbunden wird; und
wobei der Türrahmen (12) mehrere Zeilen und mehrere Spalten von Türrahmenzugriffsbereichen (14) zu individuellen Fächern (16) definiert.

2. Verfahren nach Anspruch 1, wobei die luftdurchlässigen Fächer (16) einen Bodenbereich, einen oberen Bereich, einen linken Seitenwandbereich, einen rechten Seitenwandbereich und einen Rückwandbereich umfassen, wobei mindestens einer dieser Bereich luftdurchlässig ist, und/oder wobei mindestens einer der Bereiche eine Lochplatte oder ein Drahtgitter umfasst und/oder wobei die Lochplatte oder das Drahtgitter ein Kunststoff- oder Metallmaterial umfasst.

3. Verfahren nach einem der vorhergehenden Ansprüche, wobei die Vorderflächen der Türen (18) mit der Vorderkante der Decke und mit den Vorderkanten der benachbarten Seitenwände des gekühlten Containers (2) fluchten.

4. Verfahren nach einem der vorhergehenden Ansprüche, wobei die Türen (18) als schwenkbare Türen (18) ausgebildet sind und/oder wobei die Türen (18), die in oder an einer Spalte des Türrahmens (12) angeordnet sind, um Gelenke schwenkbar sind, die gemeinsam eine im Wesentlichen vertikale Achse bilden.

5. Verfahren nach einem der vorhergehenden Ansprüche, wobei die Türen (18) ein Isoliermaterial wie etwa einen Isolierschaum umfassen.

6. Verfahren nach einem der vorhergehenden Ansprüche, wobei der gekühlte Container (2) ferner eine Rahmenkonstruktion aus horizontalen Balken und vertikalen Balken umfasst, die an den Außenkanten des gekühlten Containers (2) bereitgestellt sind, um die Wände, den Boden und die Decke sicher miteinander zu verbinden, wobei insbesondere die vertikalen Balken der Rahmenkonstruktion jeweils zwischen benachbarten Wänden bereitgestellt sind und horizontale Balken bereitgestellt sind, um jeweils den Boden mit den Unterkanten der Wände zu verbinden und die Decke mit den Oberkanten der Wände zu verbinden, und/oder wobei Befestigungselemente bereitgestellt sind, die jeweils zwei benachbarte horizontale Balken und einen jeweiligen benachbarten vertikalen Balken an den Ecken des gekühlten Containers (2) verbinden, und/oder wobei der Schritt des Montierens eines Türrahmens (12) an die Öffnung in dem gekühlten Container (2) ein vorübergehendes Entfernen mindestens eines der vertikalen und horizontalen Balken, ein Einsetzen des Türrahmens (12), ein Wiedereinsetzen des mindestens einen vertikalen und horizontalen Balkens und ein Anbringen des Türrahmens (12) umfasst.

7. Verfahren nach einem der vorhergehenden Ansprüche, wobei der Schritt des Montierens eines Türrahmens (12) an die Öffnung in dem gekühlten Container (2) ein Bereitstellen einer luftdichten Abdichtung zwischen dem Türrahmen (12) und den Kanten, die die Öffnung in dem gekühlten Container (2) umgeben, umfasst.

8. Verfahren nach einem der vorhergehenden Ansprüche, wobei der Schritt des Montierens einer Tür (18) an jedem Türrahmenzugriffsbereich (14) ein Anbringen von Abdichtungselementen, insbesondere Dichtleisten, zwischen den Türrahmenzugriffsbereichen (14) und den jeweiligen Türen (18), die vor derartigen Türrahmenzugriffsbereichen (14) positioniert sind, umfasst.

9. Verfahren nach einem der vorhergehenden Ansprüche, wobei die Verriegelungen (20) als mechanische Verriegelungen, die dazu konfiguriert sind, durch einen Schlüssel verriegelt und entriegelt zu werden, oder als elektronische Verriegelungen, die dazu konfiguriert sind, durch einen elektronischen Schlüssel wie etwa eine Chipkarte verriegelt und entriegelt zu werden, oder als elektronische Verriegelungen, die ein Eingabefeld oder eine Eingabetastatur umfassen, wodurch ein Zugangscode wie eine PIN eingegeben werden kann, ausgebildet sind.

10. Verfahren nach einem der vorhergehenden Ansprüche, wobei die Verriegelungen (20) einen Verriegelungsmechanismus umfassen, wie etwa einen Riegel, der dazu konfiguriert ist, eine Öffnung innerhalb des jeweiligen Türrahmenzugriffsbereichs (14) in Eingriff zu nehmen.

11. Verfahren nach einem der vorhergehenden Ansprüche, wobei der gekühlte Container (2) ferner einen wärmeabsorbierenden Wärmetauscher und einen zugehörigen Ventilator umfasst, die sich im Inneren des gekühlten Containers (2) befinden.

12. Verfahren nach Anspruch 11, wobei der gekühlte Container (2) ferner einen Verdichter, einen wärmeabgebenden Wärmetauscher, insbesondere einen Kondensator, und eine stromaufwärts des wärmeabsorbierenden Wärmetauschers verbundene Expansionseinrichtung und Kältemittelleitungen umfasst, die jeweils den Verdichter, den wärmeabgebenden Wärmetauscher, die Expansionseinrichtung und den wärmeabsorbierenden Wärmetauscher miteinander verbinden und ein Kältemittel dadurch zirkulieren.

## Revendications

1. Procédé pour rattraper un conteneur réfrigéré (2), en particulier une chambre froide fixe ou un conteneur réfrigéré mobile, tel qu'une camionnette, un camion ou une remorque réfrigéré, avec des compartiments réfrigérés verrouillables (16) pour permettre un accès individuel aux marchandises réfrigérées à stocker dans de tels compartiments réfrigérés (16), ledit procédé comportant les étapes de :
fourniture d'un conteneur réfrigéré (2) comprenant une porte (8) débouchant dans une paroi avant (4) de celui-ci ;
retrait d'au moins une partie d'une paroi latérale (10) du conteneur réfrigéré (2) pour former une ouverture supplémentaire dans le conteneur réfrigéré (2) ;
montage d'un cadre de porte (12) sur l'ouverture du conteneur réfrigéré (2) de sorte que le cadre de porte (12) fournit un raccordement étanche à l'air dans l'ouverture du conteneur réfrigéré (2), le cadre de porte (12) définissant des parties d'accès (14) pour un certain nombre de compartiments réfrigérés (16) ;
fixation, sur au moins une partie d'accès de cadre de porte (14), d'un compartiment perméable à l'air (16), ledit compartiment (16) s'étendant depuis la partie d'accès de cadre de porte (14) sensiblement dans la direction de la paroi latérale opposée (11) du conteneur réfrigéré (2) ;
et
montage sur chaque partie d'accès de cadre de porte (14) d'une porte (18) de sorte que cette porte (18) est mobile entre une position ouverte donnant accès au compartiment réfrigéré (16) derrière la porte (18) et une position fermée dans laquelle la porte (18) ferme la partie d'accès de cadre de porte respective (14), la porte (18) comprenant un verrou (20) pour verrouiller la porte (18) en position fermée ;
dans lequel une paroi latérale entière du conteneur réfrigéré (2) est retirée pour former une ouverture dans le conteneur réfrigéré (2) dont les dimensions correspondent aux dimensions des parois, du fond et du plafond entourant l'ouverture, et un cadre de porte (12) est monté sur l'ouverture du conteneur réfrigéré (2) en le reliant à la partie inférieure, au bord avant de la partie de toit et aux bords avant des parois latérales adjacentes du conteneur réfrigéré (2) ; et
dans lequel le cadre de porte (12) définit plusieurs rangées et plusieurs colonnes de parties d'accès de cadre de porte (14) aux compartiments individuels (16).

2. Procédé selon la revendication 1, dans lequel les compartiments perméables à l'air (16) comprennent une partie inférieure, une partie supérieure, une partie de paroi latérale gauche, une partie de paroi latérale droite et une partie de paroi arrière, au moins une de ces parties étant perméable à l'air, et/ou dans lequel au moins l'une des parties comprend une plaque perforée ou une grille métallique, et/ou dans lequel la plaque perforée ou la grille métallique comprend une matière plastique ou métallique.

3. Procédé selon l'une quelconque des revendications précédentes, dans lequel les faces avant des portes (18) s'alignent avec le bord avant du plafond et avec les bords avant des parois latérales adjacentes du conteneur réfrigéré (2) .

4. Procédé selon l'une quelconque des revendications précédentes, dans lequel les portes (18) sont formées en tant que portes pivotantes (18), et/ou dans lequel les portes (18) qui sont agencées dans ou au niveau d'une colonne du cadre de porte (12) peuvent pivoter autour de charnières qui forment ensemble un axe sensiblement vertical.

5. Procédé selon l'une quelconque des revendications précédentes, dans lequel les portes (18) comprennent un matériau isolant tel qu'une mousse isolante.

6. Procédé selon l'une quelconque des revendications précédentes, dans lequel le conteneur réfrigéré (2) comprend en outre une structure de poutres horizontales et de poutres verticales prévues sur les bords extérieurs du conteneur réfrigéré (2) pour relier solidement les parois, le fond et le plafond ensemble, en particulier les poutres verticales de la structure sont respectivement prévues entre des parois adjacentes et les poutres horizontales sont prévues pour relier respectivement le fond aux bords inférieurs des parois et pour relier le plafond aux bords supérieurs des parois, et/ ou dans lequel des éléments de fixation sont prévus reliant respectivement deux poutres horizontales adjacentes et une poutre verticale adjacente respective au niveau des coins du conteneur réfrigéré (2), et/ou dans lequel l'étape de montage d'un cadre de porte (12) sur l'ouverture dans le conteneur réfrigéré (2) comprend le retrait temporaire d'au moins l'une des poutres verticales et horizontales, l'insertion du cadre de porte (12), la réinsertion de l'au moins une poutre verticale et horizontale, et la fixation du cadre de porte (12) .

7. Procédé selon l'une quelconque des revendications précédentes, dans lequel l'étape de montage d'un cadre de porte (12) sur l'ouverture dans le conteneur réfrigéré (2) comprend la fourniture d'un scellement étanche à l'air entre le cadre de porte (12) et les bords entourant l'ouverture dans le conteneur réfrigéré (2).

8. Procédé selon l'une quelconque des revendications précédentes, dans lequel l'étape de montage d'une porte (18) sur chaque partie d'accès de cadre de porte (14) comprend la fixation d'éléments d'étanchéité, en particulier des bandes d'étanchéité, entre les parties d'accès de cadre de porte (14) et les portes respectives (18) positionnées devant de telles parties d'accès de cadre de porte (14).

9. Procédé selon l'une quelconque des revendications précédentes, dans lequel les verrous (20) sont réalisés sous forme de verrous mécaniques configurés pour être verrouillés et déverrouillés au moyen d'une clé, ou comme verrous électroniques configurés pour être verrouillés et déverrouillés au moyen d'une clé électronique, comme une carte à puce, ou comme des verrous électroniques comprenant un champ de saisie ou un clavier de saisie au moyen duquel un code d'accès comme un code PIN peut être saisi.

10. Procédé selon l'une quelconque des revendications précédentes, dans lequel les verrous (20) comprennent un mécanisme de verrouillage, tel qu'une barre de verrouillage configurée pour venir en prise avec une ouverture à l'intérieur de la partie d'accès de cadre de porte respective (14) .

11. Procédé selon l'une quelconque des revendications précédentes, dans lequel le conteneur réfrigéré (2) comprend en outre un échangeur de chaleur à absorption de chaleur et un ventilateur associé situé à l'intérieur du conteneur réfrigéré (2) .

12. Procédé selon la revendication 11, dans lequel le conteneur réfrigéré (2) comprend en outre un compresseur, un échangeur de chaleur à rejet de chaleur, notamment un condenseur, et un dispositif de détente relié en amont de l'échangeur de chaleur à absorption de chaleur, et des conduits de réfrigérant reliant respectivement le compresseur, l'échangeur de chaleur à rejet de chaleur, le dispositif de détente et l'échangeur de chaleur à absorption de chaleur et faisant circuler un réfrigérant à travers ceux-ci.
